# EUROPÄISCHE PATENTSCHRIFT

(11) **EP 4 612 023 B1**
(45) Veröffentlichungstag und Bekanntmachung des Hinweises auf die Patenterteilung: **06.05.2026**
(21) Anmeldenummer: 23761491.2
(22) Anmeldetag: 22.08.2023
(51) Int. Cl.: B60R 5/04

(54) **KRAFTFAHRZEUG MIT EINEM LADEBODEN UND VERFAHREN ZUM VERBRINGEN EINES LADEBODENS IN EINE OFFENSTELLUNG**
MOTOR VEHICLE WITH A CHARGING BASE, AND METHOD FOR BRINGING A CHARGING BASE INTO AN OPEN POSITION
VÉHICULE À MOTEUR DOTÉ D'UNE BASE DE CHARGE ET PROCÉDÉ DE MISE EN POSITION OUVERTE D'UNE BASE DE CHARGE

(30) Priorität: 02.11.2022 DE 102022128912
(43) Veröffentlichungstag der Anmeldung: 10.09.2025
(73) Patentinhaber: Audi AG, 85045 Ingolstadt (DE)
(72) Erfinder: KOPP, Rainer, 85049 Ingolstadt (DE)
(86) Internationale Anmeldenummer: PCT/EP2023/072965
(87) Internationale Veröffentlichungsnummer: WO 2024/094338

(56) Entgegenhaltungen:
- EP-A1- 1 378 397
- EP-A1- 1 728 684
- EP-A1- 2 048 031
- EP-B1- 2 429 860

## Beschreibung

Die Erfindung betrifft ein Kraftfahrzeug mit einem Ladeboden, welcher aus einer Geschlossenstellung, in welcher der Ladeboden einen in Hochrichtung des Kraftfahrzeugs unterhalb des Ladebodens angeordneten Raum verdeckt, in eine Offenstellung verbringbar ist. In der Offenstellung ist der Raum zugänglich. Eine Haltevorrichtung ist zum Halten des Ladebodens in der Offenstellung vorgesehen, wobei die Haltevorrichtung wenigstens eine Führungseinrichtung umfasst. Durch das Verbringen des Ladebodens in die Offenstellung ist wenigstens ein Lagerelement des Ladebodens entlang der wenigstens einen Führungseinrichtung in eine Endposition bewegbar. In der Endposition ist das wenigstens eine Lagerelement in Hochrichtung des Kraftfahrzeugs tiefer angeordnet als dann, wenn sich der Ladeboden in der Geschlossenstellung befindet. Des Weiteren betrifft die Erfindung ein Verfahren zum Verbringen eines Ladebodens eines Kraftfahrzeugs aus einer Geschlossenstellung in eine Offenstellung.

Die EP 1 378 397 A1 beschreibt eine gattungsgemäße Vorrichtung zur Führung eines höhenverstellbaren Ladebodens eines Kraftfahrzeugs. Die Vorrichtung umfasst eine Führungsbahn, in der ein Führungselement beweglich geführt ist. Die Führungsbahn weist einen schräg zu einer gedachten Horizontalen verlaufenden, zwischen einer unteren und einer oberen Ladebodenposition angeordneten Führungsbahnabschnitt auf.

Die EP 2 429 860 B1 beschreibt eine Vorrichtung zum Trennen einer Ablagezone, die durch eine Struktur eines Fahrzeugs bestimmt wird. Zwei Führungsmittel sind angeordnet, um eine geführte Bewegung eines vorderen Abschnitts einer Ablageplatte zwischen einer oberen Position, in welcher die Ablageplatte die Ablagezone in zwei übereinander liegende Unterabschnitte trennt, und einer unteren Position zu ermöglichen, in welcher die Ablageplatte auf einem Abschnitt der Struktur aufliegt. Die Vorrichtung umfasst in einem Zwischenabschnitt der Führungsmittel eine in zwei Richtungen wirksame Stoppvorrichtung.

Es ist unpraktisch, wenn ein Ladeboden eines Kraftfahrzeugs, welcher in die Offenstellung verbracht ist, um Zugang zu dem unterhalb des Ladebodens angeordneten Raum zu erlangen, nicht in der Offenstellung verbleibt, sondern etwa bedingt durch die Schwerkraft wieder zufällt. Denn dann muss ein Nutzer des Kraftfahrzeugs, welcher Zugang zu dem Raum oder Stauraum haben möchte und hierfür den Ladeboden in die Offenstellung verbringt, den Ladeboden selber abstützen.

Die CN 205905913 U beschreibt ein Kraftfahrzeug mit einem Ladeboden, welcher im Bereich eines in Fahrtrichtung des Kraftfahrzeugs vorderen Endes an jeweiligen Schmalseiten leistenförmige Fixierteile aufweist. In Verkleidungsteilen, welche einen Laderaum des Kraftfahrzeugs seitlich begrenzen, sind eine erste, sich horizontal erstreckende Fixiernut und eine zweite, geneigte Fixiernut ausgebildet. Wenn die leistenförmigen Fixierteile in die horizontalen Fixiernuten eingeschoben sind, so ist der Ladeboden horizontal ausgerichtet. Sind die leistenförmigen Fixierteile hingegen in die geneigten Fixiernuten eingeschoben, so ist der Ladeboden durch die Fixiernuten in einer Offenstellung gehalten.

Als nachteilig ist hierbei der Umstand anzusehen, dass die Handhabung des Ladebodens beim Verbringen desselben aus der Geschlossenstellung in die Offenstellung für einen Nutzer des Kraftfahrzeugs vergleichsweise mühselig ist.

Weitere Möglichkeiten, einen Ladeboden eines Fahrzeugs in einer Offenstellung zu fixieren, sind in der DE 10 2016 222 982 A1 sowie in der DE 10 2017 006 581 A1 beschrieben.

Aufgabe der vorliegenden Erfindung ist es, ein Kraftfahrzeug der eingangs genannten Art zu schaffen, bei welchem der Ladeboden besonders nutzerfreundlich aus der Geschlossenstellung in die Offenstellung verbringbar ist, und ein entsprechendes Verfahren anzugeben.

Diese Aufgabe wird durch ein Kraftfahrzeug mit den Merkmalen des Patentanspruchs 1 und durch ein Verfahren mit den Merkmalen des Patentanspruchs 8 gelöst. Vorteilhafte Ausgestaltungen mit zweckmäßigen Weiterbildungen der Erfindung sind in den abhängigen Patentansprüchen und in der nachfolgenden Beschreibung angegeben.

Das erfindungsgemäße Kraftfahrzeug weist einen Ladeboden auf, welcher aus einer Geschlossenstellung, in welcher der Ladeboden einen in Hochrichtung des Kraftfahrzeugs unterhalb des Ladebodens angeordneten Raum verdeckt, in eine Offenstellung verbringbar ist. In der Offenstellung ist der Raum zugänglich. Eine Haltevorrichtung des Kraftfahrzeugs dient dem Halten des Ladebodens in der Offenstellung. Die Haltevorrichtung umfasst wenigstens eine Führungseinrichtung, wobei durch das Verbringen des Ladebodens in die Offenstellung wenigstens ein Lagerelement des Ladebodens entlang der wenigstens einen Führungseinrichtung in eine Endposition bewegbar ist. In der Endposition ist das wenigstens eine Lagerelement in Hochrichtung des Kraftfahrzeugs tiefer angeordnet als dann, wenn sich der Ladeboden in der Geschlossenstellung befindet. Das wenigstens eine Lagerelement ist durch Drehen um eine Schwenkachse des Ladebodens aus einer Ausgangsposition, welche das wenigstens eine Lagerelement in der Geschlossenstellung des Ladebodens einnimmt, in eine Zwischenposition bewegbar. Aus der Zwischenposition ist das wenigstens eine Lagerelement in die Endposition bewegbar.

Ein Endabschnitt der wenigstens einen Führungseinrichtung, entlang dessen das wenigstens eine Lagerelement aus der Zwischenposition in die Endposition bewegbar ist, schließt mit der Hochrichtung des Kraftfahrzeugs einen spitzen Winkel ein. Durch eine derartige, zu der Hochrichtung des Kraftfahrzeugs geneigte Ausrichtung des Endabschnitts der Führungseinrichtung lässt sich erreichen, dass der gesamte Ladeboden mit der Hochrichtung des Kraftfahrzeugs den spitzen Winkel einschließt, wenn sich der Ladeboden in der Offenstellung befindet.

Dadurch ist einerseits der in der Geschlossenstellung des Ladebodens unterhalb des Ladebodens angeordnete Raum besonders gut zugänglich, wenn sich der Ladeboden in der Offenstellung befindet. Des Weiteren kann so vermieden werden, dass der Ladeboden in der Offenstellung Raum beansprucht, welcher für weitere Komponenten des Kraftfahrzeugs etwa in Form von Sitzen einer rückwärtigen Sitzreihe des Kraftfahrzeugs vorgesehen ist oder vorgesehen sein kann, welche in Längsrichtung oder Fahrtrichtung des Kraftfahrzeugs vor dem Ladeboden angeordnet sind. Dies ist vorteilhaft.

Die Haltevorrichtung umfasst wenigstens ein von der wenigstens einen Führungseinrichtung beabstandetes Anlageelement. An dem wenigstens einen Anlageelement liegt eine Oberseite des Ladebodens an, wenn das wenigstens eine Lagerelement in die Endposition bewegt ist. Durch das Vorsehen des Anlageelements braucht nicht von der Führungseinrichtung die zum Halten des Ladebodens in der Offenstellung erforderliche Kraft aufgebracht oder bereitgestellt zu werden. Vielmehr dient das von der Führungseinrichtung beabstandete Anlageelement der Haltevorrichtung als Widerlager für die Oberseite des Ladebodens, wenn sich der Ladeboden in der Offenstellung befindet.

Dies ist vorteilhaft, da so die Führungseinrichtung in erster Linie dem Führen des Lagerelements beim Verbringen desselben aus der Ausgangsposition über die Zwischenposition in die Endposition und zurück dient. Demgegenüber wird das Halten des Ladebodens in der Offenstellung insbesondere durch das wenigstens eine Anlageelement bewirkt.

Durch das wenigstens eine Anlageelement lässt sich in vorteilhafter Weise ein großflächiger Anlagebereich bereitstellen, in welchem die Oberseite des Ladebodens mit dem Anlageelement in Kontakt ist, wenn sich der Ladeboden in der Offenstellung befindet und somit das Lagerelement in die Endposition bewegt ist. Zudem lässt sich das von der Führungseinrichtung separate und von der Führungseinrichtung beabstandete Anlageelement sehr einfach ausreichend robust ausbilden, um das sichere Halten des Ladebodens in der Offenstellung bewirken zu können.

Bei dem Kraftfahrzeug ist folglich der Ladeboden besonders nutzerfreundlich aus der Geschlossenstellung in die Offenstellung verbringbar. Denn ein Nutzer des Kraftfahrzeugs braucht hierfür lediglich den Ladeboden um die Schwenkachse zu drehen oder zu verschwenken beziehungsweise hochzuklappen. Dadurch gelangt das Lagerelement ohne weiteres Zutun des Nutzers aus der Ausgangsposition in die Zwischenposition. Und sobald das wenigstens eine Lagerelement sich in der Zwischenposition befindet, ist das wenigstens eine Lagerelement aus der Zwischenposition in die Endposition bewegbar.

Das Verbringen des Ladebodens aus der Offenstellung in die Geschlossenstellung, in welcher die Haltevorrichtung den Ladeboden hält, ist somit für den Nutzer des Kraftfahrzeugs besonders einfach und intuitiv durchführbar. Denn der Nutzer ist es gewohnt, zum Verbringen des Ladebodens aus der Geschlossenstellung in die Offenstellung den Ladeboden um die Schwenkachse zu drehen beziehungsweise hochzuklappen. Diese dem Nutzer vertraute Bewegung geht jedoch vorliegend in vorteilhafter Weise mit der Bewegung des wenigstens einen Lagerelements aus der Ausgangsposition in die Zwischenposition einher, von welcher aus das wenigstens eine Lagerelement in die Endposition gelangen kann. Es kann also durch das Drehen oder Verschwenken des Ladebodens um die Schwenkachse die geringfügige Bewegung des Lagerelements aus der Ausgangsposition in die Zwischenposition bewirkt werden. Und aus der Zwischenposition kann sich das Lagerelement ungehindert in die Endposition bewegen, insbesondere unterstützt durch die Schwerkraft.

Demgegenüber ist ein Absenken des Lagerelements in Hochrichtung des Kraftfahrzeugs und somit ein direktes Verbringen des Lagerelements in die Endposition vorliegend unterbunden, wenn das Lagerelement die Ausgangsposition einnimmt, also dann, wenn sich der Ladeboden in der Geschlossenstellung befindet. Auf diese Weise ist verhindert, dass es zu einem unerwünschten Absinken des Lagerelements in Hochrichtung des Kraftfahrzeugs kommt, wenn sich der Ladeboden in der Geschlossenstellung befindet. Dies ist im Hinblick auf die Nutzerfreundlichkeit bei der Bedienung des Ladebodens vorteilhaft.

In der Geschlossenstellung nimmt der Ladeboden vorzugsweise eine Solllage ein, in welcher ein der Schwenkachse fernes Ende des Ladebodens vorzugsweise mit an den Ladeboden angrenzenden Bauteilen des Kraftfahrzeugs bündig ausgerichtet ist. Auf diese Weise ist durch den Ladeboden und die angrenzenden Bauteile eine durchgängige, vorzugsweise ebene Ladefläche in einem Laderaum des Kraftfahrzeugs gebildet.

Vorzugsweise ist das wenigstens eine Lagerelement durch das Drehen des Ladebodens um die Schwenkachse aus der Ausgangsposition entlang der wenigstens einen Führungseinrichtung in Längsrichtung des Kraftfahrzeugs in die Zwischenposition bewegbar. Hierbei ist das wenigstens eine Lagerelement in der Ausgangsposition einem heckseitigen Ende des Kraftfahrzeugs näher als in der Zwischenposition. Dies ist besonders vorteilhaft, um eine kontinuierliche Bewegung des Lagerelements entlang der Führungseinrichtung beim Verbringen des Lagerelements aus der Ausgangsposition über die Zwischenposition in die Endposition zu erreichen.

Des Weiteren kann durch die Beabstandung der Zwischenposition bezogen auf die Ausgangsposition in Längsrichtung des Kraftfahrzeugs weg von dem heckseitigen Ende des Kraftfahrzeugs besonders einfach sichergestellt werden, dass in der Ausgangsposition ein unerwünschtes Absenken des Lagerelements in Hochrichtung des Kraftfahrzeugs vermieden ist. Dieses Absenken stellt sich demgegenüber bei dem anschließenden Bewegen des Lagerelements aus der Zwischenposition in die Endposition ein.

Vorzugsweise ist ein freier Endbereich des Ladebodens während des Bewegens des wenigstens einen Lagerelements aus der Ausgangsposition in die Zwischenposition von einem dem Ladeboden nahen Endbereich des wenigstens einen Anlageelements beabstandet. Der freie Endbereich des Ladebodens ist in der Geschlossenstellung des Ladebodens einem frontseitigen Ende des Kraftfahrzeugs näher als einem heckseitigen Ende des Kraftfahrzeugs. Durch die Beabstandung des freien Endbereichs des Ladebodens von dem Anlageelement während der Schwenkbewegung wird erreicht, dass diese Schwenkbewegung des Ladebodens um die Schwenkachse ungehindert stattfinden kann. Dies ist für eine störungsfreie Handhabung beim Verbringen des Ladebodens aus der Geschlossenstellung in die Offenstellung und zurück vorteilhaft.

Vorzugsweise weist die wenigstens eine Führungseinrichtung wenigstens eine Rastschwelle auf, welche beim Bewegen des wenigstens einen Lagerelements aus der Ausgangsposition in die Zwischenposition zu überwinden ist. Durch das Vorsehen der wenigstens einen Rastschwelle ist ein unbeabsichtigtes Bewegen des Lagerelements aus der Ausgangsposition in die Zwischenposition in vorteilhafter Weise vermieden.

Zudem ist durch das Vorsehen der wenigstens einen Rastschwelle für den Nutzer des Kraftfahrzeugs eine haptische und/oder akustische Rückmeldung bereitstellbar, wenn der Nutzer den Ladeboden aus der Offenstellung wieder in die Geschlossenstellung verbringt. Denn auch hierbei ist zum Verbringen des Lagerelements in die Ausgangsposition ausgehend von der Zwischenposition zunächst die Rastschwelle zu überwinden.

Vorzugsweise weist das Lagerelement zumindest in einem Anlagebereich, in welchem das wenigstens eine Lagerelement während des Bewegens aus der Ausgangsposition in die Zwischenposition mit Begrenzungswänden der wenigstens einen Führungseinrichtung in Anlage ist, einen rutschfesten Belag auf. Der rutschfeste Belag ist zum Unterstützen des Überwindens der wenigstens einen Rastschwelle ausgebildet. Dementsprechend sorgt der rutschfeste Belag des Lagerelements in vorteilhafter Weise dafür, dass sich die wenigstens eine Rastschwelle besonders einfach überwinden, insbesondere überrollen, lässt, wenn beim Drehen des Ladebodens um die Schwenkachse das Lagerelement aus der Ausgangsposition in die Zwischenposition bewegt wird.

Der rutschfeste, insbesondere aus einem Gummimaterial oder dergleichen nachgiebigem Material gebildete Belag sorgt außerdem in vorteilhafter Weise für eine elastische und somit besonders geräuscharme oder geräuschlose Lagerung des Lagerelements in der Führungseinrichtung, wenn sich das Lagerelement in der Ausgangsposition befindet.

Der rutschfeste Belag oder Reibbelag kann nach Art eines Mantels ausgebildet sein, welcher einen, insbesondere zylindrischen, Grundkörper des Lagerelements umgibt oder umschließt. Durch eine derartige Ausgestaltung des Lagerelements kann auf besonders einfache Weise ein Überrollen der Rastschwelle beim Verbringen des Lagerelements aus der Ausgangsposition in die Zwischenposition erreicht werden.

Vorzugsweise ist das wenigstens eine Lagerelement in der Ausgangsposition in einer Rastmulde der wenigstens einen Führungseinrichtung aufgenommen. Dadurch ist eine gut definierte Lagerung des Lagerelements in der Führungseinrichtung erreicht, wenn sich das Lagerelement in der Ausgangsposition befindet.

Vorzugsweise ist das wenigstens eine Lagerelement als Lagerzapfen ausgebildet, durch welchen die Schwenkachse des Ladebodens bereitgestellt ist. Auf diese Weise ist das Lagerelement besonders robust und belastbar ausgebildet. Zudem lässt sich so eine sehr präzise Führung des Lagerelements entlang der Führungseinrichtung erreichen, wenn das Lagerelement aus der Ausgangsposition über die Zwischenposition in die Endposition verbracht wird. Dies gilt vorzugsweise auch dann, wenn das Lagerelement beim Verbringen des Ladebodens aus der Offenstellung in die Geschlossenstellung aus der Endposition über die Zwischenposition wieder zurück in die Ausgangsposition bewegt wird.

Das Kraftfahrzeug kann eine in Längsrichtung des Kraftfahrzeugs hinter einem Fahrersitz und einem Beifahrersitz angeordnete zweite Sitzreihe und eine hinter der zweiten Sitzreihe angeordnete dritte Sitzreihe aufweisen. Hierbei ist der Ladeboden hinter der dritten Sitzreihe angeordnet. Insbesondere bei einem derartigen Ladeboden, welcher hinter der dritten Sitzreihe des Kraftfahrzeugs angeordnet ist, ist es besonders vorteilhaft, wenn der Ladeboden mittels der Haltevorrichtung in der Offenstellung gehalten ist. Denn insbesondere die dritte Sitzreihe des Kraftfahrzeugs kann dazu beitragen, dass ein Aufstellen des Ladebodens bis zur Vertikalen oder gar darüber hinaus verhindert ist. Daher ist insbesondere bei dem die dritte Sitzreihe aufweisenden Kraftfahrzeug der vorstehend beschriebene Bewegungsmechanismus zum Bewegen des Ladebodens vorteilhaft.

Bei dem erfindungsgemäßen Verfahren zum Verbringen eines Ladebodens eines Kraftfahrzeugs aus einer Geschlossenstellung, in welcher der Ladeboden einen in Hochrichtung des Kraftfahrzeugs unterhalb des Ladebodens angeordneten Raum verdeckt, in eine Offenstellung, in welcher der Raum zugänglich ist, hält eine Haltevorrichtung des Kraftfahrzeugs den Ladeboden in der Offenstellung. Die Haltevorrichtung umfasst wenigstens eine Führungseinrichtung, wobei durch das Verbringen des Ladebodens in die Offenstellung wenigstens ein Lagerelement des Ladebodens entlang der wenigstens einen Führungseinrichtung in eine Endposition bewegt wird. In der Endposition ist das wenigstens eine Lagerelement in Hochrichtung des Kraftfahrzeugs tiefer angeordnet als dann, wenn sich der Ladeboden in der Geschlossenstellung befindet. Das wenigstens eine Lagerelement wird durch Drehen um eine Schwenkachse des Ladebodens aus einer Ausgangsposition, welche das wenigstens eine Lagerelement in der Geschlossenstellung des Ladebodens einnimmt, in eine Zwischenposition bewegt. Aus der Zwischenposition wird das wenigstens eine Lagerelement in die Endposition bewegt. Ein Endabschnitt der wenigstens einen Führungseinrichtung, entlang dessen das wenigstens eine Lagerelement aus der Zwischenposition in die Endposition bewegt wird, schließt mit der Hochrichtung des Kraftfahrzeugs einen spitzen Winkel ein, wobei der Ladeboden mit der Hochrichtung des Kraftfahrzeugs den spitzen Winkel einschließt, wenn sich der Ladeboden in der Offenstellung befindet. Die Haltevorrichtung umfasst wenigstens ein von der wenigstens einen Führungseinrichtung beabstandetes Anlageelement, an welchem eine Oberseite des Ladebodens anliegt, wenn das wenigstens eine Lagerelement in die Endposition bewegt ist.

Ein derartiges Verfahren zum Verbringen des Ladebodens in die Offenstellung ist besonders nutzerfreundlich. Denn durch das Drehen des Ladebodens um die Schwenkachse wird die Bewegung des Lagerelements aus der Ausgangsposition in die Zwischenposition bewirkt. Und aus der Zwischenposition gelangt das Lagerelement sehr einfach, vorzugsweise unterstützt durch die Schwerkraft, in die Endposition. Folglich gestaltet sich das Verbringen des Ladebodens aus der Geschlossenstellung in die Offenstellung für den Nutzer des Kraftfahrzeugs sehr einfach, aufwandsarm und intuitiv.

Die für das erfindungsgemäße Kraftfahrzeug beschriebenen Vorteile und bevorzugten Ausführungsformen gelten auch für das erfindungsgemäße Verfahren und umgekehrt.

Zu der Erfindung gehören demnach auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: in einer schematischen rückwärtigen Ansicht einen Heckbereich eines Kraftfahrzeugs, wobei ein in dem Heckbereich des Kraftfahrzeugs angeordneter Ladeboden zum einen in einer Geschlossenstellung und zum anderen in einer Offenstellung gezeigt ist;
- Fig. 2: schematisch den Ladeboden gemäß Fig. 1 in einer seitlichen Schnittansicht;
- Fig. 3: ausschnittsweise einen in Fahrtrichtung vorderen Endbereich des Ladebodens in der Geschlossenstellung sowie in der Offenstellung, wobei die Gestalt einer Führungseinrichtung gezeigt ist, entlang welcher sich ein als Lagerzapfen ausgebildetes Lagerelement des Ladebodens bewegt, wenn der Ladeboden aus der Geschlossenstellung in die Offenstellung verbracht wird;
- Fig. 4: in einer seitlichen Ansicht eine Ladebodenauflage, welche eine Haltevorrichtung umfasst, die dem Halten des Ladebodens in der Offenstellung dient, wobei von der Haltevorrichtung die auch in Fig. 3 gezeigte Führungseinrichtung sowie ein Anlageelement dargestellt sind; und
- Fig. 5: in einer stark schematisierten Draufsicht das Kraftfahrzeug mit einer dritten Sitzreihe, hinter welcher der Ladeboden angeordnet sein kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

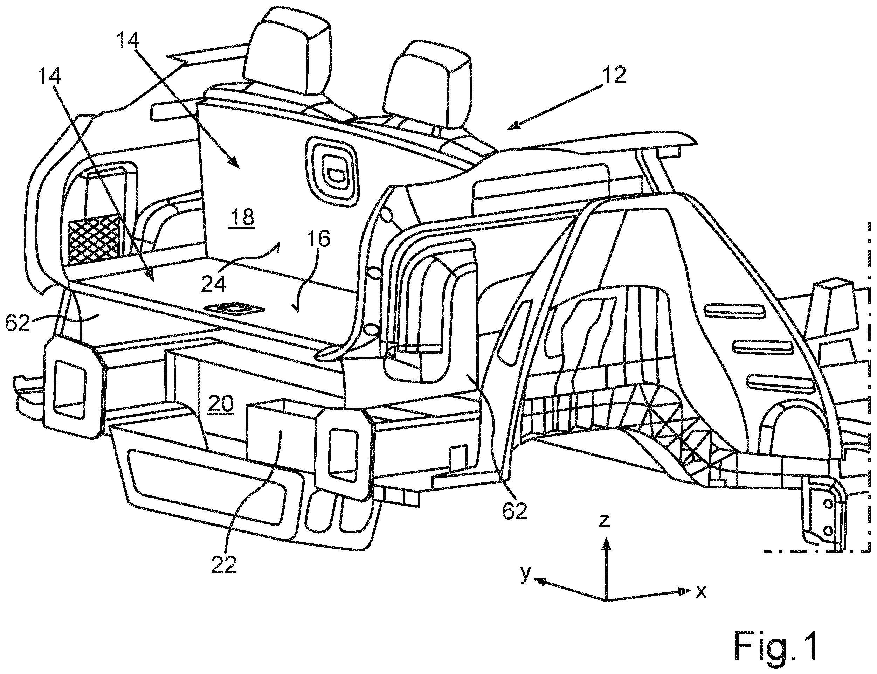

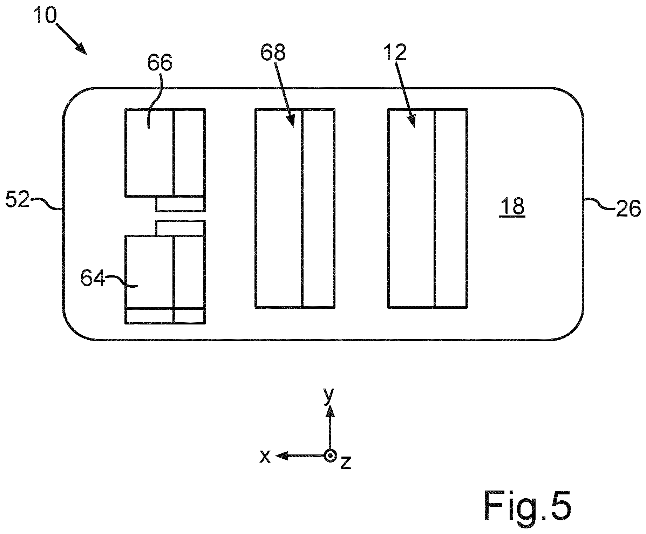

Von einem Kraftfahrzeug 10 (vergleiche Fig. 5) ist in Fig. 1 ein Heckbereich gezeigt, welcher sich hinter einer dritten Sitzreihe 12 des Kraftfahrzeugs 10 (vergleiche Fig. 5) befindet. In dem Heckbereich des Kraftfahrzeugs 10 ist ein Ladeboden 14 angeordnet, welcher in Fig. 1 zum einen in einer Geschlossenstellung und zum anderen in einer Offenstellung gezeigt ist. In der Geschlossenstellung des Ladebodens 14 ist durch eine Oberseite 16 des Ladebodens 14 ein Laderaum 18 des Kraftfahrzeugs 10 unterseitig begrenzt. Des Weiteren ist in der Geschlossenstellung des Ladebodens 14 ein in Hochrichtung z des Kraftfahrzeugs 10 unterhalb des Ladebodens 14 angeordneter Raum 20 oder Stauraum verdeckt. In diesem Raum 20 oder Stauraum lassen sich Utensilien unterbringen wie etwa ein Werkzeugkasten 22 oder dergleichen.

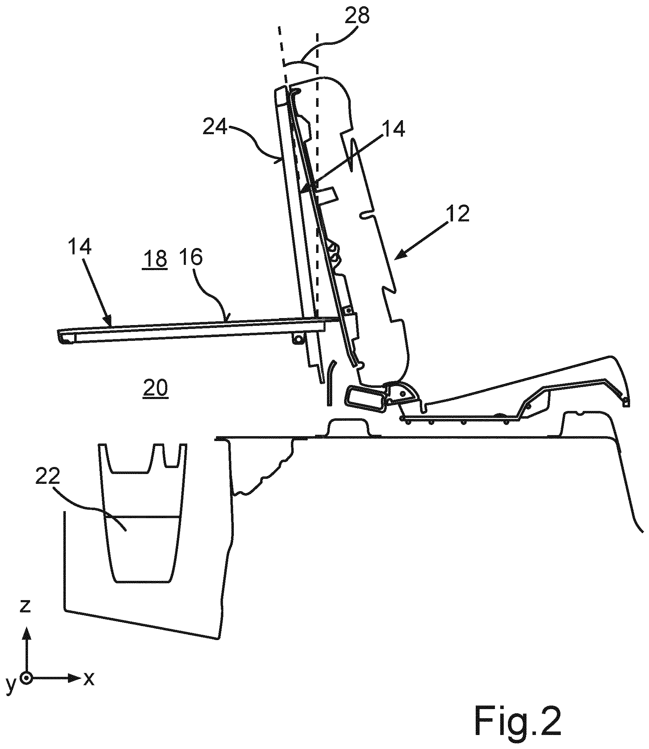

Des Weiteren ist in Fig. 1 und in Fig. 2 der Ladeboden 14 in einer Offenstellung gezeigt. In der Offenstellung des Ladebodens 14 ist eine Unterseite 24 des Ladebodens 14 einem heckseitigen Ende 26 des Kraftfahrzeugs 10 (vergleiche Fig. 5) zugewandt.

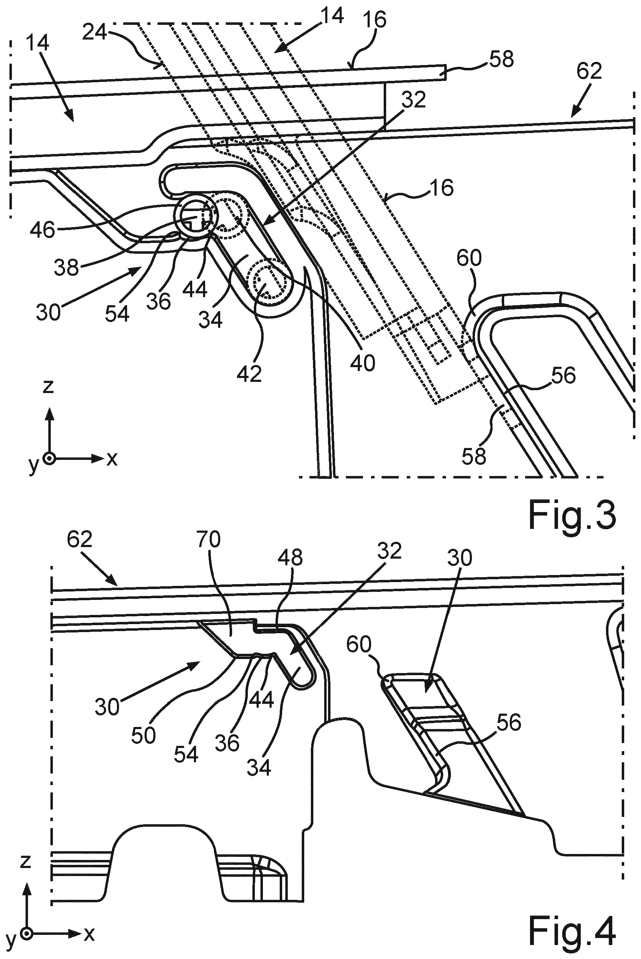

Insbesondere aus Fig. 2 ist ersichtlich, dass der in die Offenstellung verbrachte Ladeboden 14 mit der Hochrichtung z des Kraftfahrzeugs 10 beziehungsweise mit der Fahrzeughochachse einen Winkel 28 einschließt, welcher als spitzer Winkel 28 ausgebildet ist. Der Winkel 28 kann insbesondere etwa 5° betragen. Dementsprechend steht der Ladeboden 14 in der Offenstellung nicht vollständig senkrecht. Dennoch ist vorliegend verhindert, dass der Ladeboden 14 sich bedingt durch die Schwerkraft unbeabsichtigt aus der Offenstellung in die Geschlossenstellung bewegt. Hierfür sorgt eine Haltevorrichtung 30, deren Bestandteile und Funktionsweise mit Bezug auf Fig. 3 näher erläutert werden sollen.

Zum einen umfasst die Haltevorrichtung 30 eine vorliegend als Führungskulisse ausgebildete Führungseinrichtung 32 mit einem Endabschnitt 34. Der Endabschnitt 34 schließt vorliegend mit der Hochrichtung z des Kraftfahrzeugs 10 den gleichen, spitzen Winkel 28 (vergleiche Fig. 2) ein wie der Ladeboden 14 selber, wenn sich der Ladeboden 14 in der Offenstellung befindet.

Des Weiteren umfasst die Führungseinrichtung 32 eine Rastmulde 36. In dieser Rastmulde 36 ist ein vorliegend als Lagerzapfen ausgebildetes Lagerelement 38 des Ladebodens 14 aufgenommen, wenn sich das Lagerelement 38 in einer Ausgangsposition befindet.

Vorzugsweise sind an den beiden sich in Fahrzeugquerrichtung y gegenüberliegenden Seiten des Ladebodens 14 jeweilige Lagerelemente 38 angeordnet, welche in jeweiligen, als Kulissen oder Führungskulissen ausgebildeten Führungseinrichtungen 32 geführt sind. Durch das wenigstens eine Lagerelement 38 ist vorliegend die Schwenkachse des Ladebodens 14 bereitgestellt. Nachstehend soll aus Gründen der Einfachheit lediglich auf eines dieser Lagerelemente 38, nämlich auf das in Fig. 3 gezeigte Lagerelement 38 und dessen Bewegung beim Verbringen des Ladebodens 14 in die Offenstellung näher eingegangen werden.

Wenn der Ladeboden 14 durch Drehen um die Schwenkachse aus der Geschlossenstellung in die Offenstellung bewegt wird, so gelangt das Lagerelement 38 zunächst aus der Ausgangsposition, welcher das Lagerelement 38 einnimmt, wenn sich das Lagerelement 38 in der Rastmulde 36 befindet, in eine Zwischenposition 40.

In Fig. 3 ist diese Zwischenposition 40 durch das ein zweites Mal dargestellte Lagerelement 38 veranschaulicht, welches aus der Ausgangsposition, in welcher das Lagerelement 38 in der Rastmulde 36 angeordnet ist, in Längsrichtung x des Kraftfahrzeugs 10 in die Zwischenposition 40 bewegt ist. In der Zwischenposition 40 ist das Lagerelement 38 weiter von dem heckseitigen Ende 26 (vergleiche Fig. 5) des Kraftfahrzeugs 10 entfernt als in der Ausgangsposition. Mit anderen Worten ist das Lagerelement 38 in der Ausgangsposition dem heckseitigen Ende 26 des Kraftfahrzeugs 10 näher als in der Zwischenposition 40.

Wenn sich das Lagerelement 38 in der Zwischenposition 40 befindet, so kann das Lagerelement 38 entlang des Endabschnitts 34 der Führungseinrichtung 32 in eine Endposition 42 bewegt werden. Auch die Endposition 42 ist in Fig. 3 aus Gründen der Übersichtlichkeit durch das ein drittes Mal dargestellte Lagerelement 38 veranschaulicht, welches an dem in Hochrichtung z unteren Ende des Endabschnitts 34 der Führungseinrichtung 32 angelangt ist.

Die Bewegung des Lagerelements 38 aus der Zwischenposition 40 in die Endposition 42 wird vorliegend durch die Schwerkraft unterstützt. Dementsprechend gleitet das Lagerelement 38 vorliegend ungehindert aus der Zwischenposition 40 entlang des Endabschnitts 34 in die Endposition 42.

Um das Lagerelement 38 aus der Ausgangsposition und somit aus der Rastmulde 36 in die Zwischenposition 40 zu bewegen, braucht der Nutzer des Kraftfahrzeugs 10 den Ladeboden 14 lediglich um die Schwenkachse zu drehen oder zu verschwenken. Hierbei rollt das Lagerelement 38 über eine Rastschwelle 44, welche die Rastmulde 36 zu dem Endabschnitt 34 der Führungseinrichtung 32 hin begrenzt.

Um das Überwinden der Rastschwelle 44 zu unterstützen oder zu erleichtern, weist das vorliegend als Lagerzapfen ausgebildete Lagerelement 38 einen rutschfesten Belag 46 auf. Der rutschfeste Belag 46 ist mit Begrenzungswänden 48, 50 der Führungseinrichtung 32 (vergleiche Fig. 4) in Anlage, während das Lagerelement 38 aus der Ausgangsposition in die Zwischenposition 40 bewegt wird.

Insbesondere aus Fig. 3 ist weiter ersichtlich, dass vorliegend die Rastmulde 36 an einer Seite, welche dem heckseitigen Ende 26 des Kraftfahrzeugs 10 (vergleiche Fig. 5) zugewandt ist, durch eine weitere Rastschwelle 54 begrenzt ist. So ist in der Ausgangsposition eine gut definierte Lage des wenigstens einen Lagerelements 38 des Ladebodens 14 vorgegeben.

In Fig. 3 ist der Ladeboden 14 ausschnittsweise zusätzlich in der Offenstellung gezeigt, in welcher die Unterseite 24 des Ladebodens 14 dem heckseitigen Ende 26 des Kraftfahrzeugs 10 (vergleiche Fig. 5) zugewandt ist. Dementsprechend ist auch die Oberseite 16 des Ladebodens 14 nicht mehr im Wesentlichen horizontal ausgerichtet, sondern geneigt. In der Offenstellung des Ladebodens 14 liegt dann, wenn das Lagerelement 38 in die Endposition 42 bewegt ist, die Oberseite 16 des Ladebodens 14 an einem Anlageelement 56 der Haltevorrichtung 30 an, welches von der Führungseinrichtung 32 beabstandet ist (vergleiche Fig. 3).

Vorliegend ist sichergestellt, dass ein freier Endbereich 58 des Ladebodens 14 während des Bewegens des Lagerelements 38 aus der Ausgangsposition in die Zwischenposition 40 von einem dem Ladeboden 14 nahen Endbereich 60 des Anlageelements 56 beabstandet ist. Dementsprechend kollidiert der freie Endbereich 58 des Ladebodens 14 nicht mit diesem Endbereich 60 des Anlageelements 56, während das Lagerelement 38 aus der Ausgangsposition in die Zwischenposition 40 bewegt wird.

Aufgrund der anschließend stattfindenden Verlagerung des Lagerelements 38 aus der Zwischenposition 40 in die Endposition 42 gelangt die Oberseite 16 des freien Endbereichs 58 des Ladebodens 14 in Anlage mit dem Anlageelement 56 der Haltevorrichtung 30, wie dies in Fig. 3 für den in die Offenstellung verbrachten Ladeboden 14 dargestellt ist.

Der freie Endbereich 58 des Ladebodens 14 ist in der Geschlossenstellung des Ladebodens 14 einem frontseitigen Ende 52 des Kraftfahrzeugs 10 (vergleiche Fig. 5) näher als dem heckseitigen Ende 26 des Kraftfahrzeugs 10.

Vorliegend ist vorzugsweise sichergestellt, dass während des Bewegens des Ladebodens 14 aus der Geschlossenstellung in die Offenstellung keine Störkonturen in dem Laderaum 18 des Kraftfahrzeugs 10 (vergleiche Fig. 1 und Fig. 5) diese Bewegung des Ladebodens 14 behindern oder beeinträchtigen.

Aus Fig. 4 ist ersichtlich, dass die Haltevorrichtung 30 vorliegend in eine Ladebodenauflage 62 integriert ist, welche der Lagerung des Ladebodens 14 sowohl in seiner Geschlossenstellung als auch in seiner Offenstellung dient. Vorliegend sind zwei derartige Ladebodenauflagen 62 in Fahrzeugquerrichtung y voneinander beabstandet an den in Fahrzeugquerrichtung y einander gegenüberliegenden Seiten des Laderaums 18 angeordnet.

Aus Fig. 4 ist weiter ersichtlich, dass die nach Art einer Kulisse oder Führungskulisse ausgebildete Führungseinrichtung 32 an einem dem Endabschnitt 34 gegenüberliegenden Ende 70 offen ausgebildet ist. Dies ermöglicht es, den Ladeboden 14 aus dem Kraftfahrzeug 10 zu entnehmen. Bei dem Herausnehmen des Ladebodens 14 aus dem Kraftfahrzeug 10 passieren die Lagerelemente 38 oder Lagerzapfen dieses Ende 70 der jeweiligen Führungseinrichtung 32.

Gemäß Fig. 5 weist das Kraftfahrzeug 10 vorliegend einen Fahrersitz 64 sowie einen Beifahrersitz 66 auf, welche in Fig. 5 lediglich stark schematisiert dargestellt sind. In Längsrichtung x des Kraftfahrzeugs 10 hinter dem Fahrersitz 64 und dem Beifahrersitz 66 ist eine zweite Sitzreihe 68 des Kraftfahrzeugs 10 angeordnet. In Längsrichtung x hinter dieser zweiten Sitzreihe 68 ist wiederum die dritte Sitzreihe 12 angeordnet, welche auch in Fig. 1 gezeigt ist. Insbesondere bei einem derartigen Kraftfahrzeug 10, welches beispielsweise sieben von Fahrzeuginsassen des Kraftfahrzeugs 10 nutzbare Sitzplätze aufweist, ist die vorliegend beschriebene Halterung des Ladebodens 14 in der Offenstellung vorteilhaft.

Insgesamt zeigen die Beispiele, wie ein entnehmbarer Ladeboden 14 für einen Laderaum 18 oder Kofferraum eines Kraftfahrzeugs 10 bereitgestellt werden kann, welcher aufstellbar ist und welcher in der aufgestellten Position oder Offenstellung festgestellt beziehungsweise fixiert werden kann.

## Patentansprüche

1. Kraftfahrzeug mit einem Ladeboden (14), welcher aus einer Geschlossenstellung, in welcher der Ladeboden (14) einen in Hochrichtung (z) des Kraftfahrzeugs (10) unterhalb des Ladebodens (14) angeordneten Raum (20) verdeckt, in eine Offenstellung verbringbar ist, in welcher der Raum (20) zugänglich ist, und mit einer Haltevorrichtung (30) zum Halten des Ladebodens (14) in der Offenstellung, wobei die Haltevorrichtung (30) wenigstens eine Führungseinrichtung (32) umfasst, wobei durch das Verbringen des Ladebodens (14) in die Offenstellung wenigstens ein Lagerelement (38) des Ladebodens (14) entlang der wenigstens einen Führungseinrichtung (32) in eine Endposition (42) bewegbar ist, in welcher das wenigstens eine Lagerelement (38) in Hochrichtung (z) des Kraftfahrzeugs (10) tiefer angeordnet ist als dann, wenn sich der Ladeboden (14) in der Geschlossenstellung befindet,
wobei das wenigstens eine Lagerelement (38) durch Drehen um eine Schwenkachse des Ladebodens (14) aus einer Ausgangsposition, welche das wenigstens eine Lagerelement (38) in der Geschlossenstellung des Ladebodens (14) einnimmt, in eine Zwischenposition (40) bewegbar ist, aus welcher das wenigstens eine Lagerelement (38) in die Endposition (42) bewegbar ist, und wobei ein Endabschnitt (34) der wenigstens einen Führungseinrichtung (32), entlang dessen das wenigstens eine Lagerelement (38) aus der Zwischenposition (40) in die Endposition (42) bewegbar ist, mit der Hochrichtung (z) des Kraftfahrzeugs (10) einen spitzen Winkel (28) einschließt,
**dadurch gekennzeichnet, dass**
der Ladeboden (14) mit der Hochrichtung (z) des Kraftfahrzeugs (10) den spitzen Winkel (28) einschließt, wenn sich der Ladeboden (14) in der Offenstellung befindet, wobei die Haltevorrichtung (30) wenigstens ein von der wenigstens einen Führungseinrichtung (32) beabstandetes Anlageelement (56) umfasst, an welchem eine Oberseite (16) des Ladebodens (14) anliegt, wenn das wenigstens eine Lagerelement (38) in die Endposition (42) bewegt ist.

2. Kraftfahrzeug nach Anspruch 1,
**dadurch gekennzeichnet, dass**
das wenigstens eine Lagerelement (38) durch das Drehen des Ladebodens (14) um die Schwenkachse aus der Ausgangsposition entlang der wenigstens einen Führungseinrichtung (32) in Längsrichtung (x) des Kraftfahrzeugs (10) in die Zwischenposition (40) bewegbar ist, wobei das wenigstens eine Lagerelement (38) in der Ausgangsposition einem heckseitigen Ende (26) des Kraftfahrzeugs (10) näher ist als in der Zwischenposition (40).

3. Kraftfahrzeug nach einem der vorhergehenden Ansprüche,
**dadurch gekennzeichnet, dass**
ein freier Endbereich (58) des Ladebodens (14), welcher in der Geschlossenstellung des Ladebodens (14) einem frontseitigen Ende (52) des Kraftfahrzeugs (10) näher ist als einem heckseitigen Ende (26) des Kraftfahrzeugs (10), während des Bewegens des wenigstens einen Lagerelements (38) aus der Ausgangsposition in die Zwischenposition (40) von einem dem Ladeboden (14) nahen Endbereich (60) des wenigstens einen Anlageelements (56) beabstandet ist.

4. Kraftfahrzeug nach einem der vorhergehenden Ansprüche,
**dadurch gekennzeichnet, dass**
die wenigstens eine Führungseinrichtung (32) wenigstens eine Rastschwelle (44) aufweist, welche beim Bewegen des wenigstens einen Lagerelements (38) aus der Ausgangsposition in die Zwischenposition (40) zu überwinden ist.

5. Kraftfahrzeug nach Anspruch 4,
**dadurch gekennzeichnet, dass**
das wenigstens eine Lagerelement (38) zumindest in einem Anlagebereich, in welchem das wenigstens eine Lagerelement (38) während des Bewegens aus der Ausgangsposition in die Zwischenposition (40) mit Begrenzungswänden (48, 50) der wenigstens einen Führungseinrichtung (32) in Anlage ist, einen rutschfesten Belag (46) aufweist, welcher zum Unterstützen des Überwindens der wenigstens einen Rastschwelle (44) ausgebildet ist.

6. Kraftfahrzeug nach einem der vorhergehenden Ansprüche,
**dadurch gekennzeichnet, dass**
das wenigstens eine Lagerelement (38) in der Ausgangsposition in einer Rastmulde (36) der wenigstens einen Führungseinrichtung (32) aufgenommen ist und/oder das wenigstens eine Lagerelement (38) als Lagerzapfen ausgebildet ist, durch welchen die Schwenkachse des Ladebodens (14) bereitgestellt ist.

7. Kraftfahrzeug nach einem der vorhergehenden Ansprüche,
**dadurch gekennzeichnet, dass**
das Kraftfahrzeug (10) eine in Längsrichtung (x) des Kraftfahrzeugs (10) hinter einem Fahrersitz (64) und einem Beifahrersitz (66) angeordnete zweite Sitzreihe (68) und eine hinter der zweiten Sitzreihe (68) angeordnete dritte Sitzreihe (12) aufweist, wobei der Ladeboden (14) hinter der dritten Sitzreihe (12) angeordnet ist.

8. Verfahren zum Verbringen eines Ladebodens (14) eines Kraftfahrzeugs (10) aus einer Geschlossenstellung, in welcher der Ladeboden (14) einen in Hochrichtung (z) des Kraftfahrzeugs (10) unterhalb des Ladebodens (14) angeordneten Raum (20) verdeckt, in eine Offenstellung, in welcher der Raum (20) zugänglich ist, und bei welchem eine Haltevorrichtung (30) des Kraftfahrzeugs (10) den Ladeboden (14) in der Offenstellung hält, wobei die Haltevorrichtung (30) wenigstens eine Führungseinrichtung (32) umfasst, wobei durch das Verbringen des Ladebodens (14) in die Offenstellung wenigstens ein Lagerelement (38) des Ladebodens (14) entlang der wenigstens einen Führungseinrichtung (32) in eine Endposition (42) bewegt wird, in welcher das wenigstens eine Lagerelement (38) in Hochrichtung (z) des Kraftfahrzeugs (10) tiefer angeordnet ist als dann, wenn sich der Ladeboden (14) in der Geschlossenstellung befindet,
wobei das wenigstens eine Lagerelement (38) durch Drehen um eine Schwenkachse des Ladebodens (14) aus einer Ausgangsposition, welche das wenigstens eine Lagerelement (38) in der Geschlossenstellung des Ladebodens (14) einnimmt, in eine Zwischenposition (40) bewegt wird, aus welcher das wenigstens eine Lagerelement (38) in die Endposition (42) bewegt wird, und wobei ein Endabschnitt (34) der wenigstens einen Führungseinrichtung (32), entlang dessen das wenigstens eine Lagerelement (38) aus der Zwischenposition (40) in die Endposition (42) bewegt wird, mit der Hochrichtung (z) des Kraftfahrzeugs (10) einen spitzen Winkel (28) einschließt,
**dadurch gekennzeichnet, dass**
der Ladeboden (14) mit der Hochrichtung (z) des Kraftfahrzeugs (10) den spitzen Winkel (28) einschließt, wenn sich der Ladeboden (14) in der Offenstellung befindet, wobei die Haltevorrichtung (30) wenigstens ein von der wenigstens einen Führungseinrichtung (32) beabstandetes Anlageelement (56) umfasst, an welchem eine Oberseite (16) des Ladebodens (14) anliegt, wenn das wenigstens eine Lagerelement (38) in die Endposition (42) bewegt ist.

## Claims

1. Motor vehicle with a loading floor (14) which can be moved from a closed position, in which the loading floor (14) conceals a space (20) arranged below the loading floor (14) in the vertical direction (z) of the motor vehicle (10), to an open position, in which the space (20) is accessible, and with a holding device (30) for holding the loading floor (14) in the open position, wherein the holding device (30) comprises at least one guide device (32), wherein, by moving the loading floor (14) into the open position, at least one bearing element (38) of the loading floor (14) can be moved along the at least one guide device (32) to an end position (42) in which the at least one bearing element (38) is arranged lower in the vertical direction (z) of the motor vehicle (10) than when the loading floor (14) is in the closed position,
wherein the at least one bearing element (38) can be moved by rotation about a pivot axis of the loading floor (14) from a starting position, which the at least one bearing element (38) occupies in the closed position of the loading floor (14), into an intermediate position (40), from which the at least one bearing element (38) can be moved into the end position (42), and wherein an end section (34) of the at least one guide device (32), along which the at least one bearing element (38) can be moved from the intermediate position (40) to the end position (42), forms an acute angle (28) with the vertical direction (z) of the motor vehicle (10),
**characterized in that**
the loading floor (14) forms the acute angle (28) with the vertical direction (z) of the motor vehicle (10) when the loading floor (14) is in the open position, wherein the holding device (30) comprises at least one support element (56) spaced apart from the at least one guide device (32), against which support element a top face (16) of the loading floor (14) bears when the at least one bearing element (38) is moved into the end position (42).

2. Motor vehicle according to claim 1,
**characterized in that**
the at least one bearing element (38) can be moved from the starting position along the at least one guide device (32) in the longitudinal direction (x) of the motor vehicle (10) to the intermediate position (40) by rotating the loading floor (14) about the pivot axis, wherein the at least one bearing element (38) is closer to a rear end (26) of the motor vehicle (10) in the starting position than in the intermediate position (40).

3. Motor vehicle according to any one of the preceding claims,
**characterized in that**
a free end region (58) of the loading floor (14), which, in the closed position of the loading floor (14), is closer to a front end (52) of the motor vehicle (10) than to a rear end (26) of the motor vehicle (10), is spaced apart from an end region (60) of the at least one support element (56) that is close to the loading floor (14) during the movement of the at least one bearing element (38) from the starting position to the intermediate position (40).

4. Motor vehicle according to any one of the preceding claims,
**characterized in that**
the at least one guide device (32) has at least one detent threshold (44) which must be overcome when moving the at least one bearing element (38) from the starting position to the intermediate position (40).

5. Motor vehicle according to claim 4,
**characterized in that**
the at least one bearing element (38) has a non-slip coating (46), at least in a contact area in which the at least one bearing element (38) is in contact with boundary walls (48, 50) of the at least one guide device (32) during the movement from the starting position to the intermediate position (40), which coating is designed to support overcoming the at least one detent threshold (44).

6. Motor vehicle according to any one of the preceding claims,
**characterized in that**
the at least one bearing element (38) is received in the starting position in a detent recess (36) of the at least one guide device (32) and/or the at least one bearing element (38) is in the form of a bearing pin, by which the pivot axis of the loading floor (14) is provided.

7. Motor vehicle according to any one of the preceding claims,
**characterized in that**
the motor vehicle (10) has a second row of seats (68) arranged in the longitudinal direction (x) of the motor vehicle (10) behind a driver's seat (64) and a passenger seat (66) and a third row of seats (12) arranged behind the second row of seats (68), wherein the loading floor (14) is arranged behind the third row of seats (12).

8. Method for moving a loading floor (14) of a motor vehicle (10) from a closed position, in which the loading floor (14) conceals a space (20) arranged in the vertical direction (z) of the motor vehicle (10) below the loading floor (14), into an open position, in which the space (20) is accessible, and in which a holding device (30) of the motor vehicle (10) holds the loading floor (14) in the open position, wherein the holding device (30) comprises at least one guide device (32), wherein, by moving the loading floor (14) into the open position, at least one bearing element (38) of the loading floor (14) is moved along the at least one guide device (32) into an end position (42), in which the at least one bearing element (38) is arranged lower in the vertical direction (z) of the motor vehicle (10) than when the loading floor (14) is in the closed position,
wherein the at least one bearing element (38) is moved by rotation about a pivot axis of the loading floor (14) from a starting position, which the at least one bearing element (38) occupies in the closed position of the loading floor (14), to an intermediate position (40), from which the at least one bearing element (38) is moved to the end position (42), and wherein an end section (34) of the at least one guide device (32), along which the at least one bearing element (38) is moved from the intermediate position (40) to the end position (42), forms an acute angle (28) with the vertical direction (z) of the motor vehicle (10),
**characterized in that**
the loading floor (14) forms the acute angle (28) with the vertical direction (z) of the motor vehicle (10) when the loading floor (14) is in the open position, wherein the holding device (30) comprises at least one support element (56) spaced apart from the at least one guide device (32), against which support element a top face (16) of the loading floor (14) bears when the at least one bearing element (38) is moved into the end position (42).

## Revendications

1. Véhicule automobile avec un plancher de chargement (14) qui peut être déplacé d'une position fermée dans laquelle le plancher de chargement (14) dissimule un espace (20) disposé dans la direction verticale (z) du véhicule automobile (10) sous le plancher de chargement (14), à une position ouverte dans laquelle l'espace (20) est accessible, et avec un dispositif de maintien (30) pour maintenir le plancher de chargement (14) en position ouverte, dans lequel le dispositif de maintien (30) comprend au moins un appareil de guidage (32), de sorte que, lors du déplacement du plancher de chargement (14) en position ouverte, au moins un élément de palier (38) du plancher de chargement (14) peut être déplacé le long du au moins un appareil de guidage (32) jusqu'à une position finale (42) dans laquelle le au moins un élément de palier (38) est disposé plus bas dans la direction verticale (z) du véhicule automobile (10) que lorsque le plancher de chargement (14) est en position fermée,
dans lequel au moins un élément de palier (38) peut être déplacé par rotation autour d'un axe de pivotement du plancher de chargement (14) depuis une position initiale que l'au moins un élément de palier (38) occupe en position fermée du plancher de chargement (14), vers une position intermédiaire (40) à partir de laquelle le au moins un élément de palier (38) peut être déplacé vers la position finale (42), et dans lequel une section d'extrémité (34) de l'au moins un appareil de guidage (32), le long duquel le au moins un élément de palier (38) peut être déplacé de la position intermédiaire (40) vers la position finale (42), forme un angle aigu (28) avec la direction verticale (z) du véhicule automobile (10),
**caractérisé en ce que**
le plancher de chargement (14) forme un angle aigu (28) avec la direction verticale (z) du véhicule automobile (10) lorsque le plancher de chargement (14) est en position ouverte, dans lequel le dispositif de maintien (30) comprend au moins un élément de palier (56) espacé de l'au moins un appareil de guidage (32), élément contre lequel repose une surface supérieure (16) du plancher de chargement (14) lorsque le au moins un élément de palier (38) est déplacé en position finale (42).

2. Véhicule automobile selon la revendication 1,
**caractérisé en ce que**
le au moins un élément de palier (38) peut être déplacé de la position initiale le long de l'au moins un appareil de guidage (32) dans la direction longitudinale (x) du véhicule automobile (10) à la position intermédiaire (40) en faisant tourner le plancher de chargement (14) autour de l'axe de pivotement, dans lequel le au moins un élément de palier (38) est plus proche d'une extrémité arrière (26) du véhicule automobile (10) en position initiale qu'en position intermédiaire (40).

3. Véhicule automobile selon l'une quelconque des revendications précédentes,
**caractérisé en ce que**
une zone d'extrémité libre (58) du plancher de chargement (14), qui, dans la position fermée du plancher de chargement (14), est plus proche d'une extrémité avant (52) du véhicule automobile (10) que d'une extrémité arrière (26) du véhicule automobile (10), est espacée d'une zone d'extrémité (60) de l'au moins un élément de palier (56) proche du plancher de chargement (14) pendant le déplacement de l'au moins un élément de palier (38) de la position de départ à la position intermédiaire (40).

4. Véhicule automobile selon l'une quelconque des revendications précédentes,
**caractérisé en ce que**
l'au moins un appareil de guidage (32) présente au moins un seuil d'encliquetage (44) qui doit être franchi lors du déplacement de l'au moins un élément de palier (38) de la position initiale à la position intermédiaire (40).

5. Véhicule automobile selon la revendication 4,
**caractérisé en ce que**
le au moins un élément de palier (38) présente un revêtement antidérapant (46) au moins dans une zone de contact dans laquelle le au moins un élément de palier (38) est en contact avec des parois de délimitation (48, 50) de l'au moins un appareil de guidage (32) lors du mouvement de la position de départ à la position intermédiaire (40), revêtement qui est conçu pour permettre de franchir le au moins un seuil d'encliquetage (44).

6. Véhicule automobile selon l'une quelconque des revendications précédentes, **caractérisé en ce que**
le au moins un élément de palier (38) est reçu en position de départ dans un logement d'encliquetage (36) de l'au moins un appareil de guidage (32) et/ou le au moins un élément de palier (38) est conçu comme un tourillon à travers lequel l'axe de pivotement du plancher de chargement (14) est prévu.

7. Véhicule automobile selon l'une quelconque des revendications précédentes,
**caractérisé en ce que**
le véhicule automobile (10) présente une deuxième rangée de sièges (68) disposée dans la direction longitudinale (x) du véhicule automobile (10) derrière un siège conducteur (64) et un siège passager (66) et une troisième rangée de sièges (12) disposée derrière la deuxième rangée de sièges (68), dans lequel le plancher de chargement (14) est disposé derrière la troisième rangée de sièges (12).

8. Procédé de déplacement d'un plancher de chargement (14) d'un véhicule automobile (10) d'une position fermée dans laquelle le plancher de chargement (14) dissimule un espace (20) disposé dans la direction verticale (z) du véhicule automobile (10) sous le plancher de chargement (14), à une position ouverte dans laquelle l'espace (20) est accessible, et pour lequel un dispositif de maintien (30) du véhicule automobile (10) maintient le plancher de chargement (14) en position ouverte, dans lequel le dispositif de maintien (30) comprend au moins un appareil de guidage (32), de sorte que, lors du déplacement du plancher de chargement (14) en position ouverte, au moins un élément de palier (38) du plancher de chargement (14) est déplacé le long de l'au moins un appareil de guidage (32) jusqu'à une position finale (42) dans laquelle le au moins un élément de palier (38) est disposé plus bas dans la direction verticale (z) du véhicule automobile (10) que lorsque le plancher de chargement (14) est en position fermée,
dans lequel au moins un élément de palier (38) est déplacé par rotation autour d'un axe de pivotement du plancher de chargement (14) depuis une position initiale que l'au moins un élément de palier (38) occupe en position fermée du plancher de chargement (14), vers une position intermédiaire (40) à partir de laquelle le au moins un élément de palier (38) est déplacé vers la position finale (42), et dans lequel une section d'extrémité (34) de l'au moins un appareil de guidage (32), le long duquel le au moins un élément de palier (38) est déplacé de la position intermédiaire (40) vers la position finale (42), forme un angle aigu (28) avec la direction verticale (z) du véhicule automobile (10),
**caractérisé en ce que**
le plancher de chargement (14) forme un angle aigu (28) avec la direction verticale (z) du véhicule automobile (10) lorsque le plancher de chargement (14) est en position ouverte, dans lequel le dispositif de maintien (30) comprend au moins un élément de palier (56) espacé de l'au moins un appareil de guidage (32), élément contre lequel repose une surface supérieure (16) du plancher de chargement (14) lorsque le au moins un élément de palier (38) est déplacé en position finale (42).
